(19)

Europäisches
Patentamt
European
Patent Office
Office européen
des brevets

(11) **EP 1 630 003 B1**

(12) **EUROPEAN PATENT SPECIFICATION**

(45) Date of publication and mention
of the grant of the patent:
**20.06.2007 Bulletin 2007/25**

(51) Int Cl.:
*B60C 11/00* (2006.01)     *B60C 11/18* (2006.01)
*B29D 30/60* (2006.01)

(21) Application number: **05017415.0**

(22) Date of filing: **10.08.2005**

(54) **Heavy-duty pneumatic tire**

LKW-Luftreifen

Pneumatique poids-lourds

(84) Designated Contracting States:
**DE FR GB**

(30) Priority: **26.08.2004 JP 2004247171**

(43) Date of publication of application:
**01.03.2006 Bulletin 2006/09**

(73) Proprietor: **Sumitomo Rubber Industries Ltd
Kobe-shi,
Hyogo-ken (JP)**

(72) Inventor: **Maruoka, Kiyoto
Chuo-ku
Kobe-shi
Hyogo-ken (JP)**

(74) Representative: **Manitz, Finsterwald & Partner
GbR
Postfach 31 02 20
80102 München (DE)**

(56) References cited:
**EP-A- 0 576 130          EP-A- 1 216 852
EP-A- 1 398 182**

• **PATENT ABSTRACTS OF JAPAN vol. 2000, no.
20, 10 July 2001 (2001-07-10) & JP 2001 080314 A
(YOKOHAMA RUBBER CO LTD:THE), 27 March
2001 (2001-03-27)**

**Description**

BACKGROUND OF THE INVENTION

The present invention relates to a heavy-duty pneumatic tire and a method for manufacturing the same with which it is possible to effectively prevent occurrence of wrinkles or cracks at groove bottoms of main grooves.

Tread rubber for heavy-duty pneumatic tires that is employed in trucks and buses is usually made of hard rubber that exhibits superior wear resistance. However, in an intermediate term or later term of wear, the rigidity of land portions such as blocks or ribs is remarkably increased accompanying reductions in depths of the main grooves. Accordingly, large stress focuses and acts onto the groove bottom so that wrinkles or scars are apt to be caused on the surfaces, which remarkably worsen the external appearance of the tire.

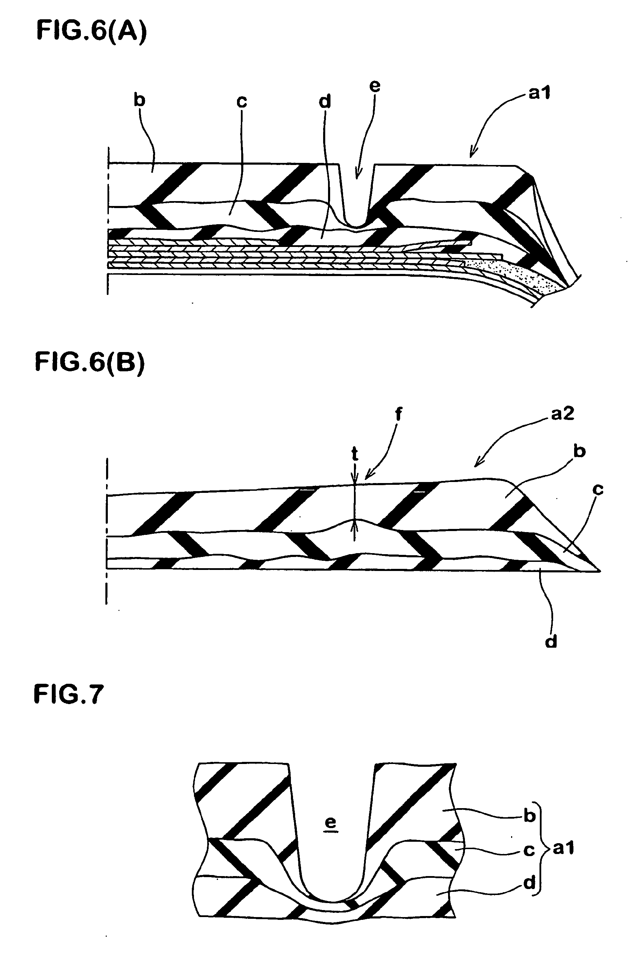

It is therefore possible to consider arranging the tread rubber formed of various types of rubber of different viscoelastic properties. Fig.6(A) illustrates a partial sectional view of a heavy-duty pneumatic tire as an example. The heavy-duty pneumatic tire is provided with a triple-layered tread rubber a1 employing three types of rubber of different viscoelastic properties. More particularly, the tread rubber a1 is comprised of a cap layer b, a middle layer c and a base layer d that are sequentially disposed from outside to inside in the tire radial direction. Rubber exhibiting, for instance, superior wear resistance, is employed as the cap layer b, rubber exhibiting low heat generating properties as the middle layer c, and rubber exhibiting superior adhesiveness is employed as a the base layer d.

Fig.6(B) is a partial sectional view of a non-vulcanized tread rubber a2 that is used for making the tread rubber a1. A triple head type rubber extruder including three independent heads (mixing portions) is usually employed for the tread rubber a2. Material rubber of respective rubber layers b, c and d (wherein rubber layers of the cap layer b, the middle layer c and the base layer d prior to vulcanization are referred to also as the rubber layer b, c and d) that have been mixed in the respective heads are merged in front of, for instance, one rubber extruding outlet and are integrated through the outlet.

The tread rubber a2 obtained through such integral extrusion can be finished to assume a substantially uniform contour shape. However, the respective rubber layers b, c and d exhibit plasticity and are affected through, for instance, pressure applied from another layer when it is merged with another layer. A drawback is accordingly presented in that boundary positions between the rubber layers will not be stable. The thickness of the respective rubber layers b, c and d thus tends to be irregular.

On the other hand, the tread rubber a2 receives heat and a large pressure when being vulcanized and molded in a mold so that it faces along the mold in a substantially flow state. A mold is often provided with main groove forming protrusions for forming main grooves e (Fig.7). The flow of rubber will be extremely large at portions contacting the main groove forming protrusions. For instance, it might happen that portions f (shown in Fig.6(B))at which the thickness t of the cap layer b is thin coincide with the main groove forming protrusions (not shown). At this time, the cap layer b might be interrupted at groove bottoms of the main grooves e or be formed to have an extremely small thickness as illustrated in Fig.7 in enlarged view. Such problems are also caused at portions other than the cap layer.

The groove bottoms of the main grooves e are continuously exposed to strains when running. Accordingly, unless the cap layer b has a sufficient thickness, a large amount of wrinkles and cracks is apt to be generated in the groove bottoms. This also leads to a drawback that the external appearance of the tire is remarkably harmed. In this respect, the followings are prior art references.

Suggestions for comprising a tire structural rubber material such as tread rubber of a strip laminated body in which rubber strips are wound in a spiral manner are disclosed in Japanese Published Patent Application No. 2000-94542, Japanese Published Patent Application No. 2002-187219, and Japanese Published Patent Application No. 2003-104013. Japanese Published Patent Application No. 2001-80314 shows a pneumatic tire comprising the features of the preamble of claim 1.

BRIEF SUMMARY OF THE INVENTION

The present invention has been made in view of the above problems, and it is an object thereof to provide a heavy-duty pneumatic tire capable of effectively preventing occurrence of wrinkles and cracks at groove bottoms of main grooves by defining the thickness of respective rubber layers to be controllable at groove bottom positions of the main grooves provided in tread rubber.

That is, the present invention is heavy-duty pneumatic tire comprising:

at least one carcass ply including a carcass that extends from a tread portion over sidewall portions to be turned up at bead cores of bead portions, the carcass being comprised of steel cords,
at least two belt plies including a belt layer that is disposed outside of the carcass in the tire radial direction, the belt layer being comprised of steel cords, and

a tread rubber that is disposed outside of the belt layer, the tread rubber being formed with main grooves that successively extend in the tire circumferential direction,

wherein the tread rubber includes

a cap layer comprised of cap rubber that is disposed on an outermost side in the tire radial direction,
a base layer that is disposed on an innermost side in the tire radial direction and that is made of base rubber different from the cap rubber, and
a middle layer that is disposed between the cap rubber and the base rubber and that is made of middle rubber different from the cap rubber and the base rubber,

wherein the cap rubber has a complex elastic modulus $E*1$ of 5.0 to 7.0 MPa and a loss tangent $\tan\delta$ of 0.08 to 0.15, wherein the respective layers are formed by using strip laminated bodies in which tape-like non-vulcanized rubber strips are spirally wound, and

wherein the tread rubber has a total thickness of 4.0 to 6.0 mm at groove bottom positions of the main grooves, with the thickness of the cap rubber layer being not less than 1.3 mm and the thickness of the base rubber layer and the middle layer being not less than 0.5 mm.

In the present descriptions, viscoelastic properties such as complex elastic moduli of rubber and loss tangents $\tan\delta$ are obtained from measuring samples that are measured by means of a viscoelasticity spectrometer under conditions for the measuring temperature being 70˚C, for the frequency being 10 Hz, for the initial stretch strain being 10%, and for the single amplitude being 1%. The measuring samples are obtained by breaking down a tire and cutting out a piece therefrom by a size of 4 mm width, 30 mm length and 1 mm thickness and by buff finishing concavo - convex surface for making flat.

In this manner, the tread rubber comprised as a triple layered structure is formed by using a strip laminated body in which a non-vulcanized rubber strip of tape-like form is spirally wound. Winding pitches and numbers of winding of the rubber strip are controlled. With this arrangement, it is possible to accurately control the thickness of respective layers of the non-vulcanized tread rubber when compared to an extruding method. It is accordingly possible to eliminate irregularities in thickness of the non-vulcanized tread rubber that were formed in the prior art. As a result, it is possible to stably form a cap layer having a thickness of, for instance, not less than 1.3 mm also at groove bottom positions of the main grooves. The cap rubber comprising the cap layer exhibits specific viscoelastic properties of superior crack resistance. It is accordingly possible to effectively prevent occurrence of cracks or wrinkles, which are predictive of those cracks, at groove bottom positions of the main grooves.

BRIEF DESCRIPTION OF THE SEVERAL VIEWS OF THE DRAWINGS

Fig.1 is a sectional view of a heavy-duty pneumatic tire illustrating one embodiment of the present invention;
Fig.2 is a partially enlarged view of a tread portion thereof;
Fig.3 is a sectional view of non-vulcanized tread rubber;
Fig.4 is a perspective view of a rubber strip;
Figs. 5(A), 5(B) and 5(C) are sectional views illustrating one example of steps for winding the rubber strip;
Fig.6(A) is a partial sectional view of a tread portion of a conventional heavy-duty pneumatic tire and Fig.6(B) is a partial sectional view of non-vulcanized tread rubber; and
Fig.7 is an enlarged view of proximate of the main groove of Fig.6(A).

DETAILED DESCRIPTION OF THE INVENTION

One embodiment of the present invention will now be explained on the basis of the drawings.

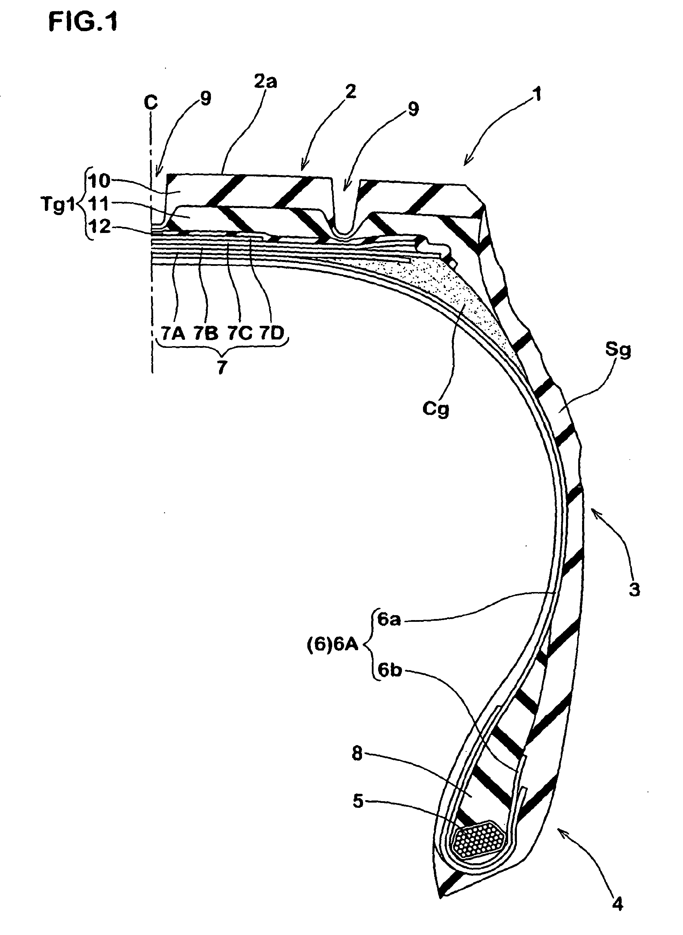

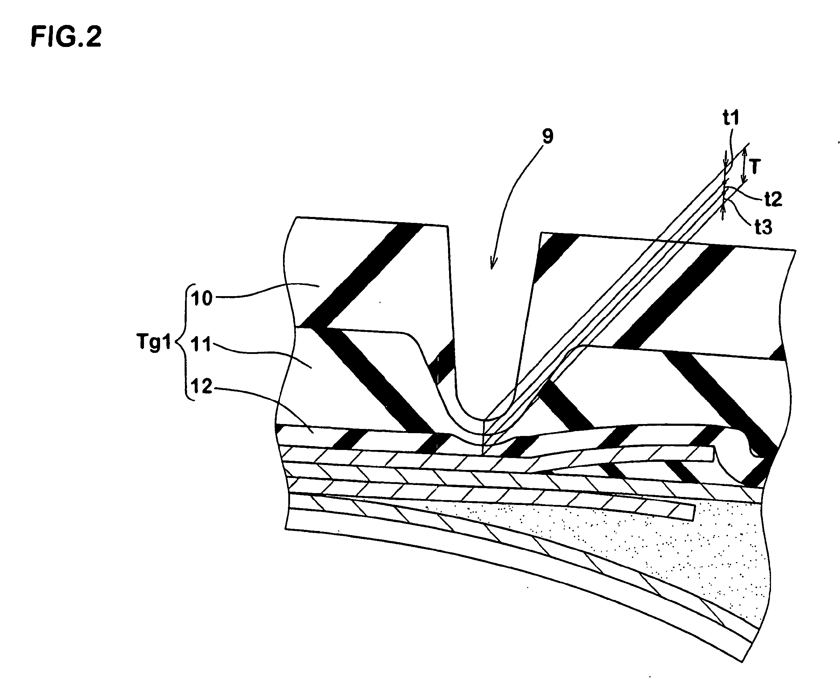

Fig. 1 illustrates a sectional view of a heavy-dutypneumatic tire 1 according to the present embodiment, and Fig. 2 illustrates an enlarged view of a tread portion thereof. The heavy-duty pneumatic tire 1 is provided with a tread portion 2, a pair of sidewall portions 3 that extend from both ends thereof inwardly in the tire radial direction, and bead portions 4 that are positioned at inner ends of the sidewall portions 3. The heavy-duty pneumatic tire 1 further comprises a toroidal carcass 6 that bridges between the bead portions 4, 4 and a belt layer 7 that is disposed outside of the carcass 6 at the tread portion.
The carcass 6 is comprised of a single carcass ply 6A having a main body portion 6a that extends from the tread portion 2 over the sidewall portions 3 up to bead cores 5 of the bead portions 4, and a turnup portions 6b that continue to the main body portion 6a. The turnup portions 6b are turned up around the bead cores 5 from inside to outside in a tire axial direction in the present embodiment. The carcass ply 6A is arranged in that steel cords are aligned at angles of, for instance, 75 to 90˚ with respect to a tire equator C. A bead apex 8 extending from the bead cores 5 outwardly in the tire radial direction in a tapering manner is provided between the main body portion 6a and the turnup portions 6b for suitably reinforcing the bead portions 4. In this respect, the heavy-duty pneumatic tire 1 of the present embodiment is illustrated to be of tubeless type in which an inner liner rubber is disposed on an inner surface of the carcass 6.

The belt layer 7 is comprised of at least two, in the present embodiment, four belt plies 7A to 7D. The belt plies are disposed such that steel cords aligned in parallel are inclined with respect to the tire equator C. At least two belt piles are overlapped such that the steel cords form an angle of approximately 15 to 40˚ with respect to the tire equator C and such that the steel cords intersect with each other.

A tread rubber Tg1 is disposed outside of the belt layer 7 in the tire radial direction. The tread rubber Tg1 comprises a tread surface 2a that grounds on road surfaces. The tread surface 2a is formed with at least one, in the present embodiment, three main grooves 9 that are recessed from the tread surface 2a and that extend successively in a tire circumferential direction. While the depth of the main grooves 9 is not particularly limited, it is preferably formed to have a depth of not less than approximately 6.0 mm and not more than 30.0 mm. The present heavy-duty pneumatic tire 1 is of so-called SOT (Sidewall Over Tread) structure, and both end portions of the tread rubber Tg1 in the tire axial direction are covered by sidewall rubber Sg.

The tread rubber Tg1 includes layers made of three types of rubber of different materials. More particularly, the tread rubber Tg1 is comprised of a cap layer 10 disposed on the outermost side in the tire radial direction and is made of cap rubber, a base layer 12 that is disposed on the innermost side in the tire radial direction and is made of base rubber, and a middle layer 11 that is disposed between the cap rubber layer 10 and the base rubber layer 12 and is made of middle rubber. In the present embodiment, the cap layer 10 and the middle layer 11 are formed over substantially the entire width of the tread portion 2. Here, the expression "substantially the entire width" denotes a width of the tread portion 2 comprised of the tread rubber Tg1 but not including portions comprised of the sidewall rubber Sg. The tread width includes groove walls and groove bottoms of the main grooves 9. In this respect, while the base layer 12 has a width that is at least larger than that of the belt layer 7, it is formed to have a width that is slightly smaller than that of the cap layer 10.

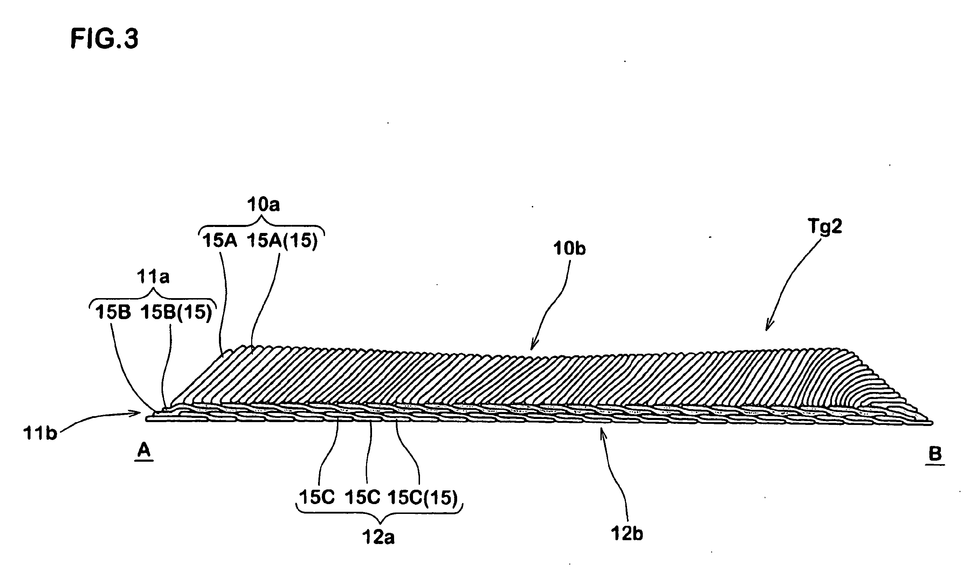

Fig. 3 illustrates a sectional view of a non-vulcanized tread rubber Tg2 prior to vulcanization. The cap layer 10, the middle layer 11 and the base layer 12 after vulcanization are formed by using non-vulcanized respective rubber layers 10b, 11b and 12b. First, second and third strip laminated bodies 10a, 11a and 12a in which non-vulcanized rubber strips 15 are spirally wound are used as the rubber layers 10b, 11b and 12b. The non-vulcanized tread rubber Tg2 is constituted by sequentially overlapping the third strip laminated body 12a, the second strip laminated body 11a and the first strip laminated body 10a from inside to outside in the tire radial direction.

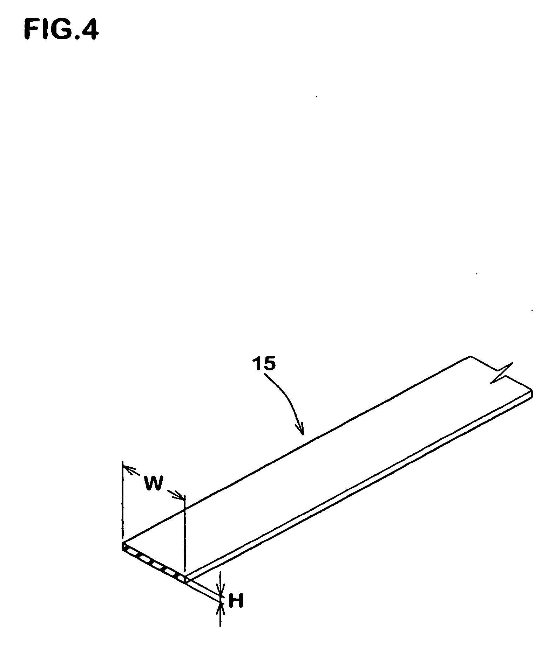

As exemplarily illustrated in Fig.4, the non-vulcanized rubber strip 15 forms a tape-like shape having a rectangle section and is successively supplied from an extruder (not shown). The rubber strip 15 that is being supplied is guided by an applicator such that its position in the tire axial direction with respect to a molding former onto which it is to be wound is controlled. The belt layer 7 is preliminarily wound around the molding former. The rubber strip 15 is spirally wound outside thereof either directly or with a cushion rubber Cg or similar being interposed between. With this arrangement, the first to third strip laminated bodies 10a, 11a and 12a are sequentially formed.

The laminated bodies 10a, 11a and 12a are arranged in that pitches of spirally winding the rubber strips 15A, 15B and 15C (amounts of movement of the strip 15 in the tire axial direction) are suitably changed. With this arrangement, they can be finished to have ideal cross-sectional shapes. In other words, pitches of winding the rubber strips 15 are preliminarily determined in accordance with cross-sectional shapes that are ideal for the respective laminated bodies, and those pitches are programmed to a control device or similar of the applicator. The applicator accurately changes the winding pitch of the rubber strip 15 on the basis of such signals.

While the widths W and thicknesses H of the rubber strips 15 are not particularly limited, they preferably have a width W of 15 to 30 mm and a thickness H of 0.7 to 1.4 mm. Where the width W of the rubber strip 15 is less than 15 mm or the thickness H thereof is less than 0.7 mm, the number of times of winding the rubber strip 15 for forming the laminated body will be increased so that the productivity tends to be degraded. On the other hand, when the width W exceeds 30 mm or the thickness H exceeds 1.4 mm, the amount of the step of rubber strips 15 overlapping in the tire radial direction will be increased so that forming delicate sectional shapes tends to be difficult.

In the present embodiment, the third strip laminated body 12a is first formed by using the third rubber strip 15C that is made of base rubber. While the method of winding is not particularly limited, in the present embodiment, the third rubber strip 15C is spirally wound in one direction from one end A side in the tire axial direction towards the other end B side. The thickness of the third strip laminated body 12a is formed to have a substantially constant thickness in this embodiment.

Outside of the third strip laminated body 12a, the second strip laminated body 11a is formed by using the second strip rubber 15B made of middle rubber. While the method of winding is not particularly limited, in the present embodiment, the second rubber strip 15B is also spirally wound in one direction from one end A side in the tire axial direction towards the other end B side. The thickness of the second strip laminated body 11a is also formed to have a substantially constant thickness in this embodiment.

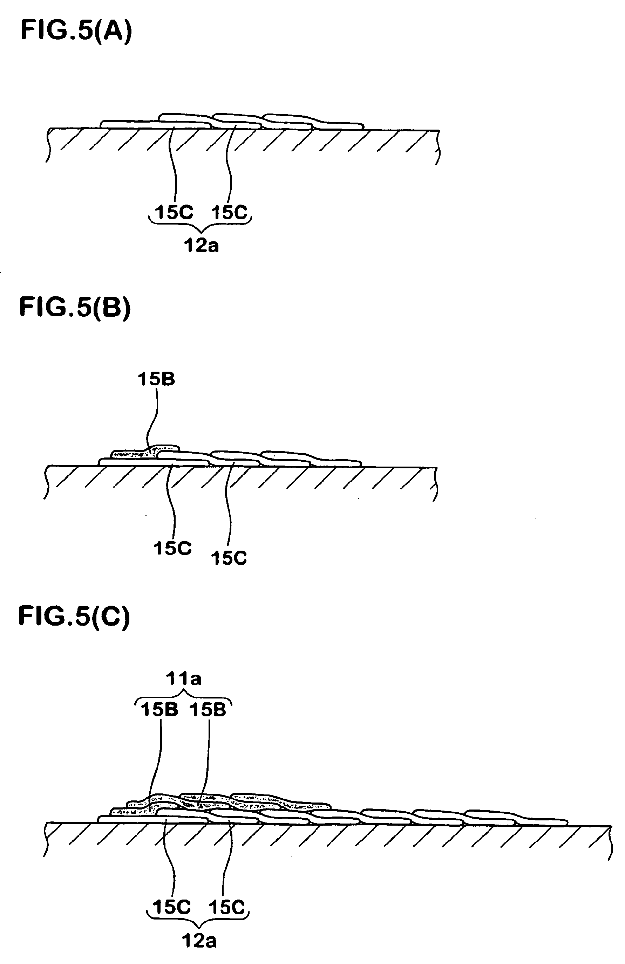

While it is possible to start winding the second strip laminated body 11a after completion of winding the third strip laminated body 12a, an idle time will be caused in such instance so that the productivity might be degraded. It is preferable that winding of the second rubber strip 15B is started during a period from start of winding of the third rubber strip 15C up to completion of winding thereof. That is, as illustrated in Fig.5(A), while the third rubber strip 15C is wound onto the molding former, winding of the rubber strip 15C is once terminated at a point of time a specified width has been formed. An starting end of winding of the second rubber strip 15B is fixed outside of the terminated rubber strip 15C (Fig.5(B)). Thereafter, the third rubber strip 15C and the second rubber strip 15B are desirably wound simultaneously towards the other end B side. With this arrangement, the winding time of the rubber strip 15 can be shortened so that the productivity is improved.

Outside of the second strip laminated body 11a, the first strip laminated body 10a is formed by using the first rubber strip 15A made of cap rubber. In the present embodiment, the first rubber strip 15A is successively wound from the other end B side in the tire axial direction towards the one end A side. The thickness thereof is arranged in that it is slightly large at both end portions in the tire axial direction while an intermediate portion is formed to have a substantially constant thickness.

However, the thickness of the respective layers and directions of winding are not limited to those of the illustrated case.

With the non-vulcanized tread rubber Tg2 obtained by overlapping the strip laminated bodies 10a, 11a and 12a, it is possible to finish the thickness of the laminated bodies 10a, 11a and 12a at high accuracy when compared to tread rubber a2 obtained through integral extrusion as illustrated in Fig. 6 (B) . Substantially no variations in thickness will accordingly be caused from tire to tire. As a result, it will be possible to prevent portions having, for instance, a thickness that is less than a tolerable dimensional lower limit from being formed at the cap laminated body 10a. It is possible to maintain the thickness of the groove bottoms also when molding the main grooves 9 through a mold in green tires formed by using such non-vulcanized tread rubber Tg2. Conventional loss or excess thinning of the cap layer 10 at groove bottom positions that were caused through molding will thus hardly happen at the tread rubber Tg1 after vulcanization, in the present invention.

The cap rubber that forms the cap layer 10 desirably has a complex elastic modulus E*1 of not less than 5.0 MPa and more preferably of not less than 5.5 MPa while an upper limit thereof is preferably not more than 7.0 MPa and more preferably not more than 6.5 MPa. The loss tangent tanδ of the cap rubber is preferably not less than 0.08, and more preferably not less than 0.10 while an upper limit thereof is preferably not more than 0.15 and more preferably not more than 0.13.

The cap rubber forms the tread surface 2A and further covers the groove bottoms of the main grooves 9. It accordingly needs to exhibit wear resistance, steering stability, and crack resistance. Where the complex elastic modulus E*1 of the cap rubber is less than 5.0 MPa, the rubber tends to soften so that the wear resistance is degraded. On the other hand, when it exceeds 7. 0 MPa, the rubber will become excessively hard so that the crack resistance and steering stability tends to be degraded. Where the loss tangent tanδ of the cap rubber is less than 0.08, the wet performance tends to be worsened. On the other hand, when it exceeds 0.15, the fuel consumption tends to be worsened.

While the middle rubber forming the middle layer 11 is disposed inside of the tread rubber Tg1 covered by the cap layer 10 in a new condition up to a tread intermediate term of wear, a part thereof will be exposed to the exterior except for groove bottom positions from the intermediate term of wear up of the cap layer 10 to an end term of wear. Such middle rubber is required to exhibit low heat generating properties for restricting internal heat generation and suitable flexibility for preventing excess increase in rigidity of land portions when the main groove depth has become small in the end term of tread wear. In this aspect, the complex elastic modulus E*2 of the middle rubber is preferably not less than 5. 0 MPa and more preferably not less than 5. 3 MPa while an upper limit thereof is preferably not more than 7.0 MPa and more preferably not more than 6.0 MPa. The loss tangent tanδ of the middle rubber is preferably not less than 0.05 and more preferably not less than 0.08 while an upper limit thereof is preferably not more than 0.15 and more preferably not more than 0.12.

The base rubber that forms the base layer 12 is disposed inside of the tread rubber Tg1 even at the end term of tread wear. It is thus required to exhibit low heat generating properties for restricting internal heat generation and high adhesiveness for preventing peeling from the belt layer 7 that is of large rigidity. In this aspect, the complex elastic modulus E*3 of the base rubber is preferably not less than 4.0 MPa and more preferably not less than 4.5 MPa while an upper limit thereof is preferably not more than 6. 0 MPa and more preferably not more than 5.5 MPa. The loss tangent tanδ of the middle rubber is preferably not less than 0.02 and more preferably not less than 0.04 while an upper limit thereof is preferably not more than 0.10 and more preferably not more than 0.08.

A JIS durometer A hardness Hd1 of the cap rubber is preferably not less than 60 degrees and more preferably not less than 63 degrees. When the hardness Hd1 becomes less than 60 degrees, early wear is apt to be caused though depending on conditions of use. While an upper limit for the hardness Hd1 is not particularly defined, it is generally selected to be not more than 72 degrees.

The JIS durometer A hardness Hd2 of the middle rubber and the JIS durometer A hardness Hd3 of the base rubber desirably satisfy the following condition:

$$Hd1 \geq Hd2 > Hd3$$

In other words, the middle rubber is defined to have a hardness equivalent to or smaller than that of the cap rubber, and the hardness of the base rubber is defined to be smaller than that of the middle rubber. With this arrangement, it is possible to achieve improvements in riding comfort. In this respect, when a difference between the hardness of the middle rubber and that of the base rubber (Hd2-Hd3) becomes excessively large, stress will be concentrated at the boundary between both members so that the durability tends to be harmed. In this aspect, the difference in hardness (Hd2-Hd3) is preferably defined to be 0. 5 to 10. 0 degrees, prererably, 0. 5 to 2. 0 degrees and more preferably 1.0 to 1.5 degrees.

The tread rubber Tg1 is arranged in that the entire thickness T is formed to be 4.0 to 6.0 mm at groove bottom positions of the main grooves 9. When the entire thickness T is less than 4.0 mm, the rigidity at the groove bottom will not be sufficiently obtained at the tread rubber Tg1 so that even larger strains will be concentrated at such portions. On the other hand, when the entire thickness T exceeds 6.0 mm, internal heat generation is apt to occur so that it is not desirable. In this respect, where the groove bottoms of the main grooves 9 have, for example, a concave arc-like sectional shape, the entire thickness T is defined to be a thickness at a position where the depth of the main groove is largest.

A thickness t1 of the cap rubber layer 10 is formed to be not less than 1.3 mm, preferably not less than 1.5 mm and more preferably not less than 1.8 mm at the groove bottoms of the main grooves 9. Where the thickness t of the cap rubber layer 10 is less than 1.3 mm, strains will be concentrated at such a portion during running so that a lot of wrinkles are caused on the groove bottoms, which tend to remarkably worsen the external appearance. Such wrinkles might further proceed early into cracks. Both the thicknesses t2 and t3 of the middle layer 11 and the base layer are not less than 0.5 mm and more preferably not less than 1.0 mm. When the thicknesses t2 and t3 are less than 0.5 mm, strains will be concentrated so that peeling is apt to occur at the interface. Upper limits of the thickness of the rubber layers are determined through restrictions of the entire thickness T.

While an embodiment of the present invention has been explained so far, the method of winding the strip laminated body and others is not limited to the illustrated embodiment but may be executed through various methods.

EXAMPLES

Heavy-duty pneumatic tires having the structure of Fig.1 and a size of 11R22.5R were manufactured according to specifications of Table 1, and wear resistance, crack resistance, and thicknesses of layers of the tread rubber were evaluated. Methods of evaluation were as follows.

<Wear resistance/crack resistance>

Each sample tire was mounted to an applicable JATMA rim (7.50'22.5), filled with standard air pressure (700 kPa) and mounted to a truck loaded with freight such that applied load per tire becomes a standard load (24.5 kN) whereupon the truck was made to run over 200,000 km. As for the wear resistance, depths of main grooves were measured at 10 spots on the circumference thereof to obtain average values, and they were indicated as indices with the value of the conventional example being defined as 100. The larger the values are, the more favorable they are. As for the crack resistance, presence/absence of cracks and wrinkles on groove bottoms were checked with eyes and evaluated on the basis of the following standards:

◎: no wrinkles observed with eyes
○: a small number of wrinkles observed with eyes
∆ : a large number of wrinkles observed with eyes but no cracks yet
✕ : cracks present

<Thickness of respective layers of tread rubber>

Thicknesses of respective rubber layers at 10 spots on the tire circumferential were measured at positions of groove central lines of the main grooves of the respective tires to obtain average values and minimum values.

The test results and others are indicated in Table 1.

Table 1

| | | | | Conventional Example | Example 1 | Example 2 | Example 3 | Example 4 | Example 5 |
|---|---|---|---|---|---|---|---|---|---|
| Structural view of tread rubber | | | | Fig.6(B) | Fig.3 | Fig.3 | Fig.3 | Fig.3 | Fig.3 |
| Width W of rubber strip [mm] | | | | - | 19.0 | 25.0 | 35.0 | 19.0 | 19.0 |
| Thickness H of rubber strip [mm) | | | | - | 1.0 | 1.2 | 1.5 | 1.0 | 1.0 |
| Complex elastic modulus E*1 of cap rubber [MPa] | | | | 6.2 | 6.2 | 6.2 | 6.2 | 6.8 | 5.5 |
| Loss tangent of cap rubber | | | | 0.12 | 0.12 | 0.12 | 0.12 | 0.14 | 0.11 |
| JIS A hardness Hd1 of cap rubber [dea] | | | | 67 | 67 | 67 | 67 | 69 | 65 |
| Complex elastic modulus E*2 of middle rubber [MPa] | | | | 5.5 | 5.5 | 5.5 | 5.5 | 5.1 | 5.5 |
| Loss tangent of middle rubber | | | | 0.10 | 0.10 | 0.10 | 0.10 | 0.10 | 0.10 |
| JIS A hardness Hd2 of middle rubber [dea] | | | | 65 | 65 | 65 | 65 | 65 | 65 |
| Complex elastic modulus E*3 of base rubber [MPa] | | | | 5.0 | 5.0 | 5.0 | 5.0 | 5.0 | 5.0 |
| Loss tangent of base rubber | | | | 0.06 | 0.06 | 0.06 | 0.06 | 0.06 | 0.06 |
| JIS A hardness Hd3 of base rubber [dea] | | | | 64 | 64 | 64 | 64 | 64 | 64 |
| Test Results | Wear resistance [index] | | | 100 | 100 | 100 | 100 | 100 | 100 |
| | Crack resistance | | | Δ | ◎ | ◎ | ○ | ○ | ◎ |
| | Thickness of groove bottom position of respective layers | Average value | Cap layer [mm] | 2.0 | 2.0 | 1.8 | 1.8 | 1.7 | 1.7 |
| | | | Middle layer [mm] | 1.5 | 1.5 | 1.6 | 1.6 | 1.6 | 1.6 |
| | | | Base layer [mm] | 1.5 | 1.5 | 1.6 | 1.6 | 1.6 | 1.6 |
| | | Minimum value | Cap layer [mm] | 1.3 | 1.8 | 1.6 | 1.3 | 1.3 | 1.3 |
| | | | Middle layer [mm] | 0.9 | 1.3 | 1.3 | 1.0 | 1.0 | 1.0 |
| | | | Base layer [mm] | 0.8 | 1.3 | 1.3 | 1.0 | 1.0 | 1.0 |

**Claims**

1. A heavy-duty pneumatic tire (1) comprising:

a carcass (64) including at least one carcass ply (6A) that extends from a tread portion (2) over sidewall portions (3) to be turned up at bead cores (5) of bead portions (4), the carcass being comprised of steel cords,
a belt layer including at least two belt plies (7A-7D) that is disposed outside of the carcass (6A) in the tire radial direction, the belt layer being comprised of steel cords, and
a tread rubber (Tg1) that is disposed outside of the belt layer, the tread rubber being formed with main grooves (9) that successively extend in the tire circumferential direction,

wherein the tread rubber includes

a cap layer (10) comprised of cap rubber that is disposed on an outermost side in the tire radial direction,
a base layer (12) that is disposed on an innermost side in the tire radial direction and that is made of base rubber different from the cap rubber, and
a middle layer (11) that is disposed between the cap rubber and the base rubber and that is made of middle rubber different from the cap rubber and the base rubber,

wherein the cap rubber has a complex elastic modulus $E^{*}1$ of 5.0 to 7.0 MPa and a loss tangent $\tan\delta$ of 0.08 to 0.15,
wherein the respective layers are formed by using strip laminated bodies in which tape-like non-vulcanized rubber strips (15) are spirally wound, and
wherein the tread rubber has a total thickness of 4.0 to 6.0 mm at groove bottom positions of the main grooves, with the thickness of the cap rubber layer being not less than 1.3 mm and the thickness of the base rubber layer and the middle layer being not less than 0.5 mm.

2. The heavy-duty pneumatic tire as claimed in Claim 1, wherein the cap rubber has a JIS durometer A hardness Hd1 of not less than 60 degrees.

3. The heavy-duty pneumatic tire as claimed in Claim 2, wherein a JIS durometer A hardness Hd2 of the middle rubber and a JIS durometer A hardness Hd3 of the base rubber satisfy the following relationship:

$$Hd1 \geq Hd2 > Hd3$$

4. The heavy-duty pneumatic tire as claimed in Claim 1, wherein the rubber strip has a rectangular section having a width of 15 to 30 mm and a thickness of 0.7 to 1.4 mm.

5. A method for manufacturing a heavy-duty pneumatic tire having at least one carcass ply (64) comprised of steel cords, at least two belt plies (7A-7D) comprised of steel cords, and a tread rubber (Tg1) disposed outside of the belt layer, the tread rubber being formed with main grooves (9) that extend in the tire circumferential direction, the method comprising the steps of:

forming non-vulcanized tread rubber (Tg2) comprised of a strip laminated body (10b,11b,12b) in which a tape-like non-vulcanized rubber strip (15) is wound outside of the belt layer in a spiral manner, and forming a green tire by using the non-vulcanized tread rubber,

wherein the step of forming the non-vulcanized tread rubber (Tg2) includes a step of forming a base layer (12) made of base rubber that is disposed on an innermost side in the tire radial direction, a step of forming a middle layer (11) that is disposed outside thereof in the tire radial direction, and step of forming a cap layer (10) that is disposed outside of the middle layer to form a tread surface, by using three types of rubber strips of different viscoelastic properties.

**Patentansprüche**

1. Schwerlastluftreifen (1), umfassend:

eine Karkasse, die zumindest eine Karkasslage (6A) umfasst, die sich von einem Laufflächenabschnitt (2) über Seitenwandabschnitte (3) erstreckt, um an Wulstkernen (5) von Wulstabschnitten (4) umgeschlagen zu sein, wobei die Karkasse aus Stahlkorden besteht,

eine Gürtelschicht, die zumindest zwei Gürtellagen (7A-7D) umfasst, die außerhalb der Karkasse (6A) in der Radialrichtung des Reifens angeordnet ist, wobei die Gürtelschicht aus Stahlkorden besteht, und

einen Laufflächengummi (Tg1), der außerhalb der Gürtelschicht angeordnet ist, wobei der Laufflächengummi mit Hauptrillen (9) gebildet ist, die sich sukzessive in der Umfangsrichtung des Reifens erstrecken,

wobei der Laufflächengummi umfasst

eine Deckschicht (10), die aus Deckgummi besteht und an der am weitesten außen liegenden Seite in der Radialrichtung des Reifens angeordnet ist,

eine Basisschicht (12), die an einer am weitesten innen liegenden Seite in der Radialrichtung des Reifens angeordnet ist und aus Basisgummi hergestellt ist, der sich von dem Deckgummi unterscheidet, und

eine Mittelschicht (11), die zwischen dem Deckgummi und dem Basisgummi angeordnet ist und aus Mittelgummi hergestellt ist, der sich von dem Deckgummi und dem Basisgummi unterscheidet,

wobei der Deckgummi einen komplexen Elastizitätsmodul E*1 von 5,0 bis 7,0 MPa und einen Verlusttangens tanδ von 0,08 bis 0,15 aufweist,

wobei die jeweiligen Schichten gebildet sind, indem aus Streifen laminierte Körper verwendet werden, in denen bandartige, nicht vulkanisierte Kautschukstreifen (15) spiralförmig gewickelt sind, und

wobei die Gummischicht eine Gesamtdicke von 4,0 bis 6,0 mm an Rillengrundpositionen der Hauptrillen aufweisen, wobei die Dicke der Deckgummischicht nicht kleiner als 1,3 mm ist und die Dicke der Basisgummischicht nicht kleiner als 0,5 mm ist.

2. Schwerlastluftreifen nach Anspruch 1, wobei der Deckgummi eine JIS-Durometer-A-Härte Hd1 von nicht weniger als 60 Grad aufweist.

3. Schwerlastluftreifen nach Anspruch 2, wobei eine JIS-Durometer-A-Härte Hd2 des Mittelgummis und eine JIS-Durometer-A-Härte Hd3 des Basisgummis die folgende Beziehung erfüllen:

$$Hd1 \geq Hd2 > Hd3.$$

4. Schwerlastluftreifen nach Anspruch 1, wobei der Gummistreifen einen rechteckigen Querschnitt mit einer Breite von 15 bis 30 mm und einer Dicke von 0,7 bis 1,4 mm aufweist.

5. Verfahren zum Herstellen eines Schwerlastluftreifens mit mindestens einer Karkasslage (6A), die aus Stahlkorden besteht, mindestens zwei Gürtellagen (7A-7D), die aus Stahlkorden bestehen, und einem Laufflächengummi (Tg1), der außerhalb der Gürtelschicht angeordnet ist, wobei der Laufflächengummi mit Hauptrillen (9) gebildet ist, die sich in der Umfangsrichtung des Reifens erstrecken, wobei das Verfahren die Schritte umfasst, dass:

ein nicht vulkanisierter Laufflächenkautschuk (Tg2) gebildet wird, der aus einem aus Streifen laminierten Körper (10b, 11b, 12b) besteht, in dem ein bandartiger, nicht vulkanisierter Kautschukstreifen (15) auf die Außenseite der Gürtelschicht auf eine spiralförmige Weise gewickelt wird, und

ein Rohreifen unter Verwendung des nicht vulkanisierten Laufflächenkautschuks gebildet wird,

wobei der Schritt des Bildens des nicht vulkanisierten Laufflächenkautschuks (Tg2) einen Schritt, dass eine Basisschicht (12) gebildet wird, die aus Basiskautschuk hergestellt wird, der auf der am weitesten innen liegenden Seite in der Radialrichtung des Reifens angeordnet wird, einen Schritt, dass eine Mittelschicht (11) gebildet wird, die auf dessen Außenseite in der Radialrichtung des Reifens angeordnet wird, und einen Schritt umfasst, dass eine Deckschicht (10) gebildet wird, die außerhalb der Mittelschicht angeordnet wird, um eine Laufflächen-Oberfläche zu bilden, indem drei Arten von Gummistreifen mit unterschiedlichen viskoelastischen Eigenschaften verwendet werden.

**Revendications**

1. Bandage pneumatique pour poids lourds (1) comprenant :

   une carcasse comprenant au moins un pli de carcasse (6A) qui s'étend à partir d'une partie de bande de roulement (2) sur des parties de paroi latérale (3) pour être retournée au niveau des tringles (5) des parties de talon (4), la carcasse étant composée de cordes d'acier,
   une couche de ceinture comprenant au moins deux plis de ceinture (7A-7D) qui sont déposés à l'extérieur de la carcasse (6A) dans la direction radiale du bandage, la couche de ceinture étant composée de cordes d'acier, et
   un caoutchouc de bande de roulement ($T_g$1) qui est disposé à l'extérieur de la couche de ceinture, le caoutchouc de bande de roulement étant formé avec des rainures principales (9) qui s'étendent successivement dans la direction circonférentielle du bandage,

   dans lequel le caoutchouc de bande de roulement comprend :

   une couche de chape (10) composée de caoutchouc de chape qui est disposée sur le côté situé le plus à l'extérieur dans la direction radiale du bandage,
   une couche de base (12) qui est disposée sur le côté situé le plus à l'intérieur dans la direction radiale du bandage et qui est réalisée avec un caoutchouc de base qui est différent du caoutchouc de chape, et
   une couche centrale (11) qui est disposée entre le caoutchouc de chape et le caoutchouc de base qui est réalisé avec le caoutchouc central différent du caoutchouc de chape et du caoutchouc de base,

   dans lequel le caoutchouc de chape a un module d'élasticité complexe E*1 de 5,0 à 7,0 MPa et une tangente de perte tanδ de 0,08 à 0,15,
   dans lequel les couches respectives sont formées en utilisant des corps laminés en bande dans lesquels les bandes de caoutchouc non vulcanisées en forme de bande (15) sont enroulées en spirale, et
   dans lequel le caoutchouc de bande de roulement a une épaisseur totale de 4,0 à 6,0 mm au niveau des positions inférieures de rainure des rainures principales, avec l'épaisseur de la couche de caoutchouc de chape qui est non inférieure à 1,3 mm et l'épaisseur de la couche de caoutchouc de base et la couche centrale qui n'est pas inférieure à 0,5 mm.

2. Bandage pneumatique pour poids lourds selon la revendication 1, dans lequel le caoutchouc de chape a une dureté Hd1 au duromètre JIS A non inférieure à 60 degrés.

3. Bandage pneumatique pour poids lourds selon la revendication 2, dans lequel une dureté Hd2 au duromètre JIS A du caoutchouc central et une dureté Hd3 au duromètre JIS A du caoutchouc de base satisfont la relation suivante :

$$\text{Hd1} \geq \text{Hd2} > \text{Hd3}.$$

4. Bandage pneumatique pour poids lourds selon la revendication 1, dans lequel la bande de caoutchouc a une section rectangulaire ayant une épaisseur allant de 15 à 30 mm et une épaisseur de 0,7 à 1,4 mm.

5. Procédé pour fabriquer un bandage pneumatique pour poids lourds ayant au moins un pli de carcasse 6A composé de cordes d'acier, au moins deux plis de ceinture (7A-7D) composés de cordes d'acier, et un caoutchouc de bande de roulement (Tg1) disposé à l'extérieur de la couche de ceinture, le caoutchouc de bande de roulement étant formé avec des rainures principales (9) qui s'étendent dans la direction circonférentielle du bandage,
   le procédé comprenant les étapes consistant à :

   former un caoutchouc de bande de roulement non vulcanisé (Tg2) composé d'un corps laminé en bande (10b, 11b, 12b) dans lequel la bande de caoutchouc non vulcanisée en forme de bande (15) est enroulée à l'extérieur de la couche de ceinture d'une manière en spirale,
   et former un bandage cru en utilisant le caoutchouc de bande de roulement non vulcanisé, dans lequel l'étape consistant à former le caoutchouc de bande de roulement non vulcanisé (Tg2) comprend une étape consistant à former une couche de base (12) réalisée avec du caoutchouc de base qui est disposé sur le côté le plus interne dans la direction radiale du bandage, une étape consistant à former une couche centrale (11) qui est disposée à l'extérieur de celle-ci dans la direction radiale du bandage, et une étape consistant à former une

**11**

couche de chape (10) qui est disposée à l'extérieur de la couche centrale pour former une surface de bande de roulement,
en utilisant trois types de bande de caoutchouc de différentes propriétés viscoélastiques.

EP 1 630 003 B1

# FIG.1

FIG.2

EP 1 630 003 B1

FIG.3

# FIG.4

15

W

H

## FIG.5(A)

15C  15C

12a

## FIG.5(B)

15B

15C  15C

## FIG.5(C)

11a

15B  15B

15C  15C

12a

FIG.6(A)

FIG.6(B)

FIG.7

**EP 1 630 003 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000094542 A
- JP 2002187219 A
- JP 2003104013 A
- JP 2001080314 A